# EUROPÄISCHE PATENTANMELDUNG

(11) **EP 2 261 002 A1**
(43) Veröffentlichungstag der Anmeldung: **15.12.2010**
(21) Anmeldenummer: 10005261.2
(22) Anmeldetag: 20.05.2010
(51) Int. Cl.: B29C 45/72, B29C 45/27, B29C 45/73

(54) **Heizvorrichtung**

(30) Priorität: 12.06.2009 DE 102009025164
(71) Anmelder: Günther Heisskanaltechnik GmbH, 35066 Frankenberg/Eder (DE)
(72) Erfinder: Schnell, Torsten, 35104 Lichtenfels (DE); Sommer, Siegrid, 35099 Burgwald (DE); Günther, Herbert, 35108 Allendorf (DE)
(74) Vertreter: Buchhold, Jürgen

(57) **Zusammenfassung**

Man erkennt, dass bei einer Heizvorrichtung 130 für eine Spritzgießvorrichtung, umfassend wenigstens eine Heizung 60, die aus einem Trägerelement und einem wärmeerzeugenden Element besteht, und wenigstens ein von der Heizung 60 verschiedenes wärmeleitendes Element 50 umfasst, das wärmeleitende Element 50 vorteilhaft aus einem anisotropen Material gefertigt ist. Dabei weist das anisotrope Material eine hochwärmeleitende Richtung auf, wobei die Wärmeleitfähigkeit in der hochwärmeleitenden Richtung mehr als 500 W/mK, bevorzugt mehr als 1000 W/mK, besonders bevorzugt mehr als 1500 W/mK beträgt. Bevorzugt ist daher das anisotrope Material ein pyrolytischer Graphit, bevorzugt ein thermisch-pyrolytischer Graphit. Man erkennt weiter, dass es günstig ist, wenn die Heizung 60 durch eine wärmeleitende Verbindung V direkt oder indirekt derart mit dem wärmeleitfähigen Element 50 verbunden ist, dass die Wärme in der hochwärmeleitenden Richtung durch das wärmeleitende Element 50 geleitet wird. Man erkennt außerdem, dass die Verwendung eines anisotropen Materials zum gerichteten Wärmetransport in einer Heizvorrichtung 130 einer Spritzgießvorrichtung besonders vorteilhaft ist, wenn das anisotrope Material wenigstens eine hochwärmeleitende Richtung aufweist, wobei das anisotrope Material in wenigstens einer Richtung, bevorzugt der hochwärmeleitenden Richtung, eine Wärmeleitfähigkeit von mehr als 500 W/mK, bevorzugt mehr als 1000 W/mK, besonders bevorzugt mehr als 1500 W/mK aufweist.

## Beschreibung

Die Erfindung betrifft eine Heizvorrichtung für Spritzgießvorrichtungen gemäß dem Oberbegriff von Anspruch 1 sowie die Verwendung eines anisotropen Materials zum gerichteten Wärmetransport in einer Heizvorrichtung einer Spritzgießvorrichtung.

Spritzgießvorrichtungen werden üblicherweise eingesetzt, um eine fließfähige Kunststoffmasse bei einer vorgebbaren Temperatur unter hohem Druck einem trennbaren Werkzeugblock (Formnest) zuzuführen. Eine solche Spritzgießvorrichtung umfasst gewöhnlich wenigstens einen Verteiler und wenigstens eine Spritzgießdüse. Damit sich die zumeist heiße Masse innerhalb der Vorrichtung - speziell innerhalb eines in der Vorrichtung ausgebildeten Strömungskanals - nicht vorzeitig abkühlt, ist gewöhnlich eine Heizung vorgesehen, welche ein Materialrohr bzw. den darin ausgebildeten Strömungskanal konzentrisch umgibt und den flüssigen Kunststoff möglichst bis in die Spitze der Spritzgießdüsen hinein auf einer konstanten Temperatur halten soll. Eine thermische Trennung zwischen heißer Spritzgießvorrichtung und kälterem Werkzeug sorgt dafür, dass die Vorrichtung nicht einfriert und gleichzeitig das Werkzeug (Formnest) nicht erwärmt wird.

Materialrohr und Heizung sind meist als separate Bauelemente ausgeführt, wobei die Heizung gemeinsam mit einem Thermofühler in einer Ummantelung integriert sein kann, die umfangsseitig auf den Düsenkörper aufsteckbar ist. Bei der Ummantelung handelt es sich, wie z.B. in DE U1 295 07 848 offenbart, um einen Träger, der einen elektrisch aktivierbaren Heizleiter in Wendelform aufnimmt und mittels Halte- bzw. Spannelementen auf dem Außenumfang des Düsenkörpers in axialer Richtung festlegbar ist.

Eine weiter entwickelte Heizung offenbart DE 10 2006 049 667 A1. Diese sieht vor, dass ein wärmeerzeugendes Element in Form einer Dickschichtheizung auf ein Trägerrohr aufgebracht wird. Die Heizung kann dann auf ein Materialrohr aufgeschoben werden und den darin ausgebildeten Strömungskanal mit Wärme versorgen.

Problematisch bei allen diesen Lösungen ist, dass der besonders sensible Bereich zwischen der Spritzgießdüse und dem Formnest nur schlecht mit Wärme versorgt werden kann. Daher hat man beispielsweise in WO 2005/018 906 A1 Düsenspitzen und Einsätze aus hochwärmeleitfähigem Material entwickelt. Diese erwärmen sich durch den Kontakt mit dem beheizten Materialrohr. Der in den Bereich zwischen der Spritzgießdüse und dem Formnest hineinragende Teil der Spitze soll auf diese Weise die dort vorhandene fließfähige Masse erwärmen und vor dem Erstarren bewahren.

Nachteilig hierbei ist, dass einerseits die Materialkosten sehr hoch sein können, insbesondere dann, wenn die Düsenspitze nicht nur eine optimale Wärmeversorgung gewährleisten soll, sondern gleichzeitig auch noch möglichst verschleißfest sein soll. Außerdem ist der Wärmetransport bei diesen Lösungen häufig nicht optimal.

Aufgabe der Erfindung ist es daher, diese und weitere Nachteile des Standes der Technik zu beseitigen und eine verbesserte Heizvorrichtung zu schaffen, die mit einfachen Mitteln herzustellen ist und einen optimale Beheizung des Strömungskanals in allen Bauteilen gewährleistet. Insbesondere soll die Heizvorrichtung möglichst raumsparend gefertigt werden können und gleichzeitig eine optimale Versorgung auch entfernt liegender Düsenbauteile ermöglichen.

Hauptmerkmale der Erfindung sind im kennzeichnenden Teil von Anspruch 1 und in Anspruch 12 angegeben. Ausgestaltungen sind Gegenstand der Ansprüche 2 bis 11, 13 und 14.

Bei einer Heizvorrichtung für eine Spritzgießvorrichtung, umfassend wenigstens eine Heizung, die aus einem Trägerelement und einem wärmeerzeugenden Element besteht, und wenigstens ein von der Heizung verschiedenes wärmeleitendes Element umfasst, sieht die Erfindung vor, dass das wärmeleitende Element aus einem anisotropen Material gefertigt ist.

Ein erster Vorteil der erfindungsgemäßen Lösung liegt darin, dass die Wärme mit Hilfe des wärmeleitenden Elementes an Stellen transportiert werden kann, die beispielsweise aufgrund eingeschränkter Platzverhältnisse nicht unmittelbar mit der Heizung in Kontakt stehen können. Ist darüber hinaus noch das Material des wärmeleitenden Elementes anisotrop - bevorzugt thermisch anisotrop - so kann die Orientierung des Materials des wärmeleitenden Elementes außerdem genutzt werden, um einen gerichteten Wärmetransport zu erzielen. Das wärmeleitende Element transportiert dann die Wärme in einer bestimmten Richtung besonders gut und effektiv, in wenigstens einer anderen nicht.

Das hat wesentliche Vorteile für die Effektivität der erfindungsgemäßen Heizvorrichtung. So geht erstens auf dem Weg wenig Wärme an Teile verloren, die nicht Ziel des Wärmetransports sind. Zweitens wird wenigstens in geringem Maß ein isolierender Effekt in der nicht hochwärmeleitenden Richtung erzielt.

Man erkennt, dass es von besonderem Vorteil ist, wenn das anisotrope Material wenigstens eine hochwärmeleitende Richtung aufweist.

Eine besonders gute und effektive Wärmeleitung wird dabei erreicht, wenn die Wärmeleitfähigkeit in der hochwärmeleitenden Richtung mehr als 500 W/mK, bevorzugt mehr als 1000 W/mK, besonders bevorzugt mehr als 1500 W/mK beträgt. Man erkennt weiter, dass es daher günstig ist, wenn das anisotrope Material ein pyrolytischer Graphit, bevorzugt ein thermisch-pyrolytischer Graphit ist. Die Verwendung anderer Materialien mit den entsprechenden Eigenschaften ist jedoch vorstellbar.

Um die Wärme von dem wärmeerzeugenden Element der Heizung auf das wärmeleitfähige Element der Heizvorrichtung zu übertragen, ist es vorteilhaft, wenn die Heizung durch eine wärmeleitende Verbindung direkt oder indirekt derart mit dem wärmeleitfähigen Element verbunden ist, dass die Wärme in der hochwärmeleitenden Richtung durch das wärmeleitende Element geleitet wird. Das wärmeleitfähige Element wird auf diese Weise von seinem einen Ende her mit der Wärme der Heizung gespeist. Es transportiert diese dann zu seinem anderen Ende an den Ort, an dem die Wärme ihre Wirkung entfalten und dazu dienen soll, die fließfähige Masse in der Spritzgießvorrichtung auf der optimalen Temperatur zu halten. Dies ist insbesondere vorteilhaft, da somit auch Bereiche der Spritzgießdüse mit Wärme versorgt werden können, die beispielsweise aus räumlichen Gründen nicht unmittelbar von einer Heizung umgeben sein können. So kann beispielsweise die Spitze eines Düsenmundstückes unmittelbar mit Wärme versorgt werden. Insgesamt kann auf diese Weise die erzeugte Wärme der Heizung effektiver genutzt werden.

Auch ist es dank des erfindungsgemäßen wärmeleitfähigen Elementes nicht länger notwendig, das gesamte Düsenmundstück - wie aus dem Stand der Technik bekannt - aus einem hochwärmeleitfähigen Material zu fertigen. Dies ist insbesondere vorteilhaft, da vor allem das Düsenmundstück und die Düsenspitze im normalen Betrieb der Spritzgießvorrichtung hohem Verschleiß ausgesetzt sind und daher üblicherweise bevorzugt aus einem verschleißfesten Material gefertigt werden. Ein Material, dass jedoch beiden Anforderungen genügt - nämlich gleichzeitig hochwärmeleitfähig und verschleißfest zu sein - ist in der Regel sehr teuer. Mit Hilfe der erfindungsgemäßen Heizvorrichtung können nun jedoch Bauteile, die hohem Verschleiß ausgesetzt sind, aus einem gängigen verschleißfesten Werkzeugstahl günstig hergestellt werden. In diese Bauteile kann dann ein erfindungsgemäßes wärmeleitfähiges Element eingesetzt werden, welches die Wärme einer Heizung gezielt und gerichtet zu den gewünschten zu beheizenden Bereichen der Bauteile transportiert.

Man erkennt, dass es günstig ist, wenn das wärmeleitende Element in einen Teil der Spritzgießvorrichtung einbettbar ist.

Dabei ist es einerseits denkbar, dass das wärmeleitendes Element in der hochwärmeleitenden Richtung in unmittelbarem Kontakt mit der Heizung steht. Andererseits ist aber auch vorstellbar, dass das wärmeleitende Element in räumlicher Trennung zur Heizung angeordnet ist.

Steht das wärmeleitende Element in unmittelbarem Kontakt mit der Heizung, wird die Wärme direkt durch eine wärmeleitende Verbindung, die von der Kontaktfläche zwischen beiden Bauteilen gebildet wird, in der hochwärmeleitenden Richtung in das wärmeleitende Element geleitet.

Ist das wärmeleitende Element in räumlicher Trennung zur Heizung angeordnet, so ist es vorteilhaft, wenn die Verbindung zwischen der Heizung und dem wärmeleitenden Element von einem Teil der Spritzgießvorrichtung gebildet ist. Die Heizung ist dann indirekt durch dieses Verbindungsteil - bei dem es sich beispielsweise um die Innenwand des Materialrohres handeln kann - mit dem wärmeleitfähigen Element verbunden. Das Verbindungsteil wird von der Heizung auf die gewünschte Temperatur gebracht. Diese wird an einer Kontaktfläche, die zwischen dem Verbindungsteil und dem wärmeleitfähigen Element ausgebildet ist, auf das wärmeleitfähige Element übertragen und von diesem an die gewünschte Stell transportiert.

Man erkennt, dass es zweckmäßig sein kann, dass der die Verbindung zwischen der Heizung und dem wärmeleitenden Element bildende Teil der Spritzgießvorrichtung verschieden ist von dem Teil der Spritzgießvorrichtung, in welchem das wärmeleitende Element eingebettet ist.

Vorstellbar ist auch, dass das wärmeleitende Element auf einem Teil der Spritzgießvorrichtung aufgebracht ist. Insbesondere in Bereichen, in denen beispielsweise Düsen oder Verteilerplatten einer Spritzgießvorrichtung sehr dicht aneinander angeordnet werden sollen, ist der für die Anbringung einer Heizung zur Verfügung stehende Raum begrenzte. Mit Hilfe der erfindungsgemäßen Lösung kann nunmehr die Heizung an einer entfernten Stelle angeordnet werden und die Wärme mit Hilfe von wärmeleitenden Elementen zum Zielort transportiert werden, die beispielsweise auf der Außenseite eines Materialrohres oder zwischen Verteilerplatten angeordnet werden.

Insgesamt erkennt man, dass die Verwendung eines anisotropen Materials zum gerichteten Wärmetransport in einer Heizvorrichtung einer Spritzgießvorrichtung von besonderem Vorteil ist.

Dabei ist es günstig, wenn das anisotrope Material wenigstens eine hochwärmeleitende Richtung aufweist und wenn das anisotrope Material in wenigstens einer Richtung, bevorzugt der hochwärmeleitenden Richtung, eine Wärmeleitfähigkeit von mehr als 500 W/mK, bevorzugt mehr als 1000 W/mK, besonders bevorzugt mehr als 1500 W/mK aufweist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 a ein Ausführungsbeispiel für eine Heizvorrichtung mit in einer materialführenden Düsenspitze einer Spritzgießdüse integriertem wärmeleitfähigem Element;
Fig. 1b einen Querschnitt durch den Düsenspitzenbereich des Ausführungsbeispiels von Fig. 1 a;
Fig. 2a ein Ausführungsbeispiel für ein in einer nicht-materialführenden Düsenspitze einer Spritzgießdüse integriertes wärmeleitfähiges Element;
Fig. 2b eine Detailansicht des Düsenspitzenbereichs des Ausführungsbeispiels von Fig. 2a;
Fig. 3 einen am Formanguss eines Formnests enden Strömungskanal mit einem wärmeleitfähigen Element, das zwischen einem Materialrohr und einem Düsenmundstück einer Nadelverschlussdüse aufgebracht ist;
Fig. 4 eine Spritzgießdüse mit auf dem Materialrohr angeordnetem wärmeleitfähigen Element;
Fig. 5 eine weitere Spritzgießdüse mit auf dem Materialrohr angeordnetem wärmeleitfähigem Element;
Fig. 6a ein Materialrohr einer Spritzgießdüse mit mehreren aufgebrachten wärmeleitfähigen Elementen;
Fig. 6b ein weiteres Materialrohr einer Spritzgießdüse mit aufgebrachten wärmeleitfähigen Elementen; und
Fig. 7 eine Spritzgießvorrichtung mit mehreren an einem Verteiler angeordneten Spritzgießdüsen.

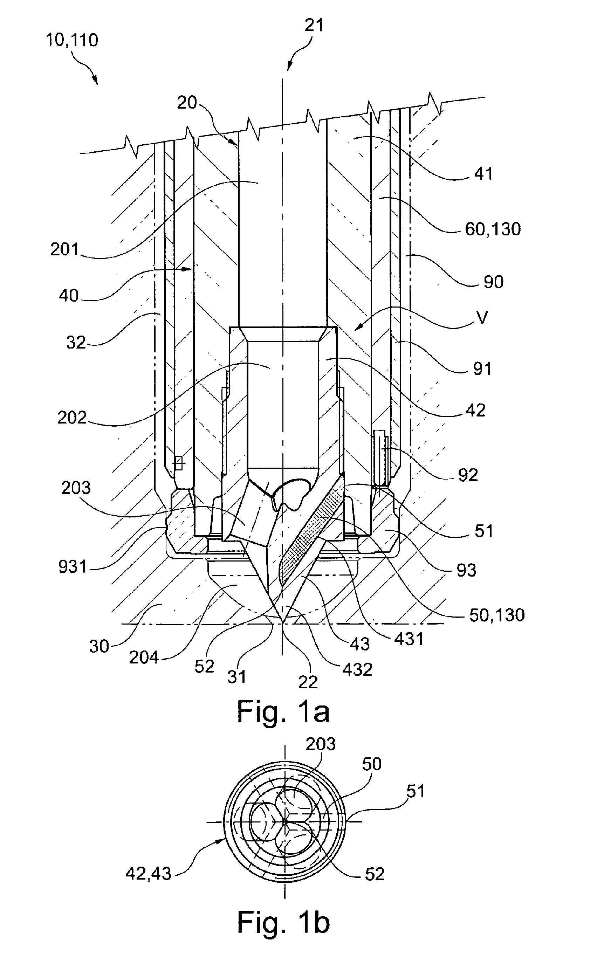

Der in Fig. 1a dargestellte Ausschnitt einer Spritzgießvorrichtung 10 zeigt das untere Ende einer Spritzgießdüse 110. Diese hat einen Düsenkörper 40, bestehend aus einem Materialrohr 41 und einem in das untere Ende des Materialrohres 41 eingesetzten Düsenmundstück 42. An dem Düsenmundstück 42 ist eine materialführende Düsenspitze 43 ausgebildet. Mit deren Hilfe soll die fließfähige Masse zunächst in den Bereich 204 des Strömungskanals 20 zwischen der Spritzgießdüse 110 und der Formangussöffnung 31 gebracht werden. Dort soll die fließfähige Masse die Düsenspitze 43 umströmen und dadurch auf der für die Verarbeitung notwendigen Temperatur gehalten werden.

Um dies zu gewährleisten, ist die Spritzgießdüse 110 mit einer erfindungsgemäßen Heizvorrichtung 130 ausgebildet. Diese besteht aus einer Heizung 60 und einem wärmeleitfähigen Element 50. Bei der Heizung 60 handelt es sich beispielsweise um eine Dickschichtheizung, die auf ein Trägerrohr aufgebracht ist. Andere herkömmliche Bauweisen der Heizung, wie etwa ein in ein Trägerelement integrierter Heizwendel, sind jedoch ebenfalls vorstellbar. Die Heizung 60 ist auf das Materialrohr 41 aufgeschoben. Das wärmeleitfähige Element 50 ist ein Stab aus pyrolytischem oder thermo-pyrolytischem Graphit, der in einer Ausnehmung 431 der Düsenspitze 43 integriert ist. Dabei hat das wärmeleitfähige Element 50 an seinem einen Ende einen Kontaktbereich 51 an dem es mit dem Materialrohr 41 in Kontakt steht. An seinem anderen Ende bildet es eine Kontaktspitze 52 mit dem Material der Düsenspitze 43.

Wie insbesondere in Fig. 1b erkennbar, kann die Düsenspitze 43 dabei mit drei Abschnitten 203 des Strömungskanals 20 ausgebildet sein, die von der eigentlichen Spitze weg nach außen hin verlaufen. Das wärmeleitfähige Element 50 ist dagegen derart angeordnet, dass es die Wärme gerade nach innen zur Spitze hin leitet. Vorteilhafterweise sind dazu im gezeigten Ausführungsbeispiel drei wärmeleitenden Elemente 50 derart zwischen den drei Abschnitten 203 des Strömungskanals 20 angeordnet, dass sich die Kontaktspitzen 52 in der Mitte der Düsenspitze 43 treffen. Mithin ist eine besonders effektive und gleichmäßige Wärmezufuhr von allen Seiten her möglich.

Besonders günstig ist es, wenn der hoch-anisotrope Graphitstab derart orientiert ist, dass er in der Richtung R, die zwischen dem Kontaktbereich 51 mit dem Materialrohr 41 und der Kontaktspitze 52 verläuft hochwärmeleitfähig ist. Mithin hat das wärmeleitende Element 50 in dieser Richtung eine Wärmeleitfähigkeit von über 1000 W/mK, bei einer Verwendung von thermo-pyrolytischem Graphit sogar von über 1500 W/mK.

Die Wärme des durch die Heizung 60 auf die optimale Temperatur gebrachten Materialrohres 41 wird auf diese Weise am Kontaktbereich 51 durch das wärmeleitende Element 50 aufgenommen und unmittelbar zur Kontaktspitze 52 geleitet. Dort wird die Wärme nahezu ohne Verluste an das Material der Düsenspitze 43 abgegeben. Das Düsenmundstück 42 heizt sich dadurch insbesondere im Bereich der Spitze 432 auf. In der Folge wird die fließfähige Masse über den gesamten Strömungskanal 20 hinweg bis in den besonders kritischen Bereich 204 zwischen Spritzgießdüse 110 und Formnest 30 auf der für die Verarbeitung optimalen Temperatur gehalten. Gleichzeitig entfällt die Notwendigkeit, das Düsenmundstück 42 oder zumindest die Düsenspitze 43 aus einem hochwärmeleitfähigen Material zu fertige. Stattdessen ist es mit Hilfe des erfindungsgemäßen wärmeleitfähigen Elementes 50 möglich, dass die Düsenspitze 43 - wie beispielsweise auch für Materialrohr 41 und Verteiler 120 üblich - aus einem herkömmlichen Werkzeugstahl gefertigt wird. Dieser ist in der Regel deutlich verschleißfester und kostengünstiger als entsprechende hochwärmeleitfähige Materialien.

Man erkennt, dass die erfindungsgemäße Heizvorrichtung 130 als großen Vorteil ein wärmeleitendes Element 50 aus einem anisotropen Material bietet, mit dessen Hilfe ein Düsenmundstück 42 zum Einsatz kommen kann, das aus einem kostengünstigen verschleißfestem Material gefertigt werden kann und bei dem dennoch eine optimale Temperierung bis in den äußersten Bereich der Düsenspitze 43 erreicht wird.

Man erkennt weiter, dass das Materialrohr 41 eine erfindungsgemäße Verbindung V zwischen der Heizung 60 und dem wärmeleitfähigen Element 50 bildet und die Heizung 60 daher indirekt mit dem wärmeleitfähigen Element 50 in Kontakt steht.

Die Fig. 1 a offenbart weiterhin, dass die Spritzgießdüse 10 in einer Ausnehmung 32 des Formnests 30 eingesetzt ist. Zur Sicherung und Zentrierung der Spritzgießdüse 10 ist im unteren Bereich der Ausnehmung 32 ein Stütz- und Dichtring 93 eingesetzt, auf welchem sich das Materialrohr 41 und die Heizung 60 abstützen. Der Stütz- und Dichtring 93 begrenzt gleichzeitig den Bereich 204 und verhindert so, dass die fließfähige Masse in einen Luftspalt 90 eindringt, der zwischen der Spritzgießdüse 10 und dem Formnest 30 zur Isolierung ausgebildet ist. Dies wird insbesondere durch einen am Stütz- und Dichtring 93 ausgebildeten Rand 931 begünstigt, der derart passgenau in der Ausnehmung 32 eingesetzt ist, dass er beim Erreichen der Betriebstemperatur einen dichtenden Abschluss mit der Innenwand der Ausnehmung 32 des Formnest 30 bildet.

Daneben erkennt man ebenfalls in Fig. 1a, dass die Heizung 60 mit einem Schutzrohr 91 und einem Thermofühler 92 versehen sein kann.

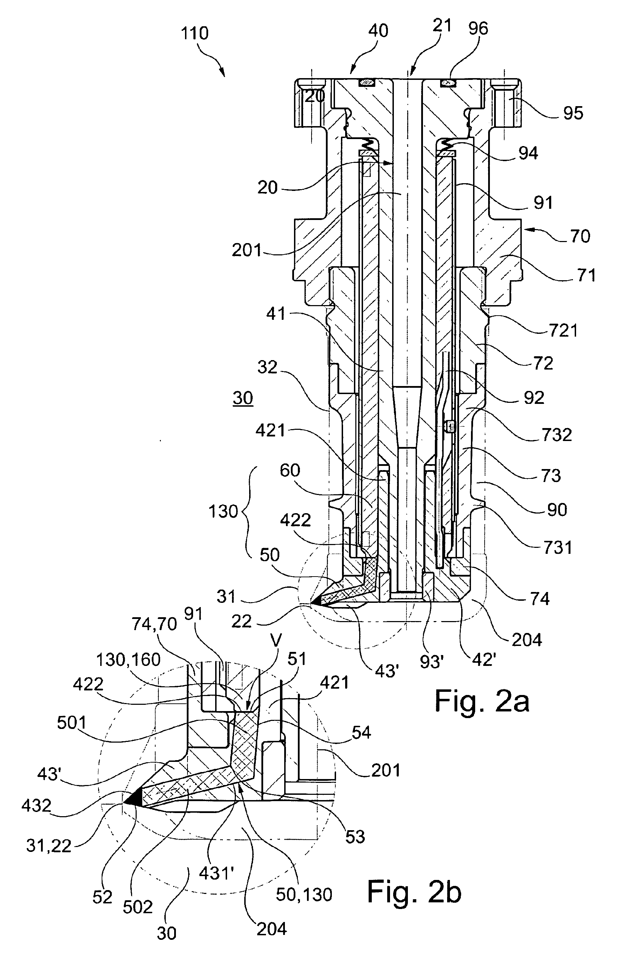

In einem weiteren - in den Fig. 2a und 2b dargestellten - Ausführungsbeispiel steht die Heizung 60 unmittelbar mit dem wärmeleitfähigen Element 50 in Kontakt. Auch die hier dargestellte erfindungsgemäßen Spritzgießdüse 110 ist für den Einsatz in einer erfindungsgemäßen Spritzgießvorrichtung 10 vorgesehen.

Die Spritzgießdüse 110 hat ein Gehäuse 70, welches aus mehreren Gehäuseabschnitten 71, 72, 73, 74 besteht, und ist - wie auch die im vorherigen Ausführungsbeispiel gezeigte Spritzgießdüse 110 - in eine Ausnehmung 32 im Formnest 30 eingesetzt. Verschiedene Stütz- und Dichtvorsprünge 731, 732, 721 richten die Spritzgießdüse 110 dabei in der Ausnehmung 32 aus und sorgen für einen sicheren Sitz sowie für die Abdichtung des isolierenden Luftspaltes 90, welcher sich zwischen der Spritzgießdüse 110 und dem Formnest 30 befindet. Die Spritzgießdüse 110 kann beispielsweise mit Hilfe von Befestigungselementen 95 an einem (nicht dargestellten) Verteiler festgelegt werden, wobei eine Dichtung 96 verhindert, dass fließfähige Masse zwischen der Spritzgießdüse 110 und dem Verteiler austreten kann.

In dem Gehäuse 70 der Spritzgießdüse 110 ist der Düsenkörper 40 angeordnet. Dieser hat ein Materialrohr 41 auf dessen unterem Bereich ein Endstück 42' mit wenigstens einer, bevorzugt mehreren Düsenspitzen 43' aufgesetzt ist. Das Endstück 42' wird mit Hilfe des Stütz- und Dichtrings 93' am Materialrohr gesichert.

Man erkennt, dass der Strömungskanal 20 an einer Einlassöffnung 21 beginnt. Dort kann er beispielsweise durch einen Strömungskanal eines erfindungsgemäßen Verteilers gespeist werden. Im Anschluss an die Einlassöffnung 21 weist der Strömungskanal 20 in dem Materialrohr 41 einen Abschnitt 201 auf, der unmittelbar in den Bereich 204 des Strömungskanals 20 zwischen der Spritzgießdüse 110 und der Formangussöffnung 31 mündet. Die fließfähige Masse umströmt die Düsenspitzen 43' und gelangt von dort an der Formangussöffnung 31 durch die Austrittsöffnung 22 des Strömungskanals 20 in die (nicht dargestellte) Gussform.

Um die fließfähige Masse auf der gewünschten Temperatur zu halten ist wiederum eine Heizvorrichtung 130 vorgesehen, bestehend aus einer Heizung 60 und wärmeleitfähigen Elementen 50. Die Heizung 60 ist auf das Materialrohr 41 aufgeschoben und mit einem Schutzrohr 91 umgeben. In die Heizung 60 kann ein Thermofühler 92 integriert sein. Zwischen der Heizung 60 und dem Kopf des Materialrohres 41 sind Federn 94 angeordnet. Diese belasten die Heizung 60 in Richtung auf die Formangussöffnung 31, so dass das untere Ende der Heizung 60 auf einen Absatz 422 des Endstückes 42' gedrückt wird.

Man erkennt sowohl in Fig. 2a als auch im Detail in Fig. 2b, dass in dem Endstück 42' für jede Düsenspitze 43' ein wärmeleitfähiges Element 50 integriert ist. Das Endstück 42' hat dafür im Bereich jeder Düsenspitze 43' eine winkelförmige Ausnehmung 431'. Es ist dann beispielsweise denkbar, dass das wärmeleitfähige Element 50 im einfachsten Fall aus zwei Stiften 501, 502 besteht. Jeder der Stifte 501, 502 ist in einen Schenkel der winkelförmigen Ausnehmung 431' eingesetzt, so dass die Stifte 501, 502 im Scheitelpunkt aneinander liegen und eine Kontaktfläche 53 aufweisen. Der erste Stift 501 steht dabei außerdem mit der Heizung 60 in einem Bereich 51 in Kontakt, der zweite Stift 502 in einem Bereich 52 mit der Spitze 432 der Düsenspitze 43'.

Man erkennt weiter, dass es auch hier besonders günstig ist, wenn das wärmeleitfähige Element 50 aus einem thermisch anisotropen Material ist, welches jeweils in der Richtung, die zwischen den Kontaktbereichen 51, 52 und der Kontaktfläche 53 verläuft, hochwärmeleitfähig ist. Mithin hat das wärmeleitfähige Element 50 in dieser Richtung - wenn es sich beispielsweise um einen pyrolytischen Graphit handelt - eine Wärmeleitfähigkeit von über 1000 W/mK, bei einer Verwendung von thermo-pyrolytischem Graphit sogar von über 1500 W/mK.

Die Wärme der Heizung 60 wird auf diese Weise am Kontaktbereich 52 unmittelbar durch das wärmeleitfähige Element 50, nämlich durch den ersten Stift 501, aufgenommen, zur Kontaktfläche 53 geleitet und dort auf den zweiten Stift 502 übertragen. Dieser leitet die Wärme zum Kontaktbereich 52 und heizt so die Spitze 432 der Düsenspitze 43' höchst effektiv auf. Insgesamt wird so die Wärme von der Heizung 60 nahezu ohne Verluste auf die Düsenspitze 43' übertragen, ohne dass die Düsenspitze 43' dazu extra aus einem hochwärmeleitfähigen Materialsein muss. Mithin kann die Düsenspitze 43' aus einem herkömmlichen Werkzeugstahl gefertigt wird. Dieser ist in der Regel deutlich verschleißfester und kostengünstiger als entsprechende hochwärmeleitfähige Materialien.

Denkbar ist es bei dieser Lösung selbstverständlich auch, dass das wärmeleitfähige Element 50 aus einem durchgängigen winkelförmigen Stück besteht. Auch kann die Wärme nicht nur unmittelbar von der Heizung 60 übernommen werden, sondern auch vom Halsbereich 421 des Endstückes 42', welcher ebenfalls mit der Heizung 60 in Kontakt steht. Zwischen Halsbereich 421 und wärmeleitfähigem Element 50 kann dann die Wärme über den Kontaktbereich 54 übertragen werden.

Vorstellbar ist auch, dass die winkelförmige Ausnehmung 431' nicht mit einem Stift, sondern mit einem Granulat des gewünschten Materials befüllt wird.

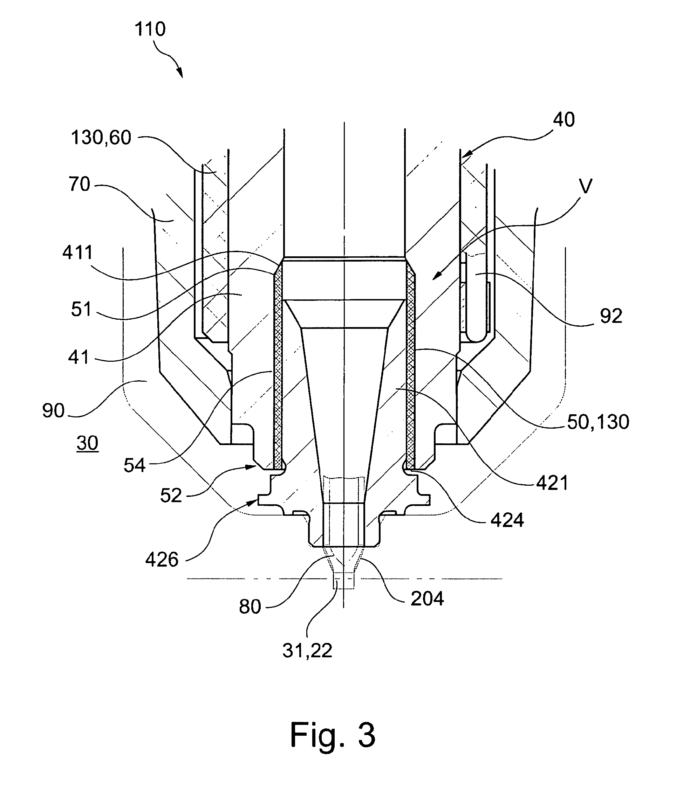

Eine weitere Variante zur Anordnung des wärmeleitfähigen Elementes 50 in einer Spritzgießdüse 110 ist die in Fig. 3 dargestellte Ummantelung eines Düsenmundstückes 42, welches in das untere Ende eines Materialrohres 41 eingesetzt ist. Man erkennt auch hier, dass der Strömungskanal 20 eine Abschnitt 201 im Materialrohr 41, einen Abschnitt 202 im Düsenmundstück 42 und einen Bereich 204 zwischen der Spritzgießdüse 110 und der Formangussöffnung 31 aufweist. Die Formangussöffnung 31 ist in diesem Beispiel mit Hilfe einer Verschlussnadel 80 verschließbar. Die fließfähige Masse soll hier bis zum Bereich 204 hin durch das Düsenmundstück 42 auf der optimalen Temperatur gehalten werden, daher ist es notwendig, dass Düsenmundstück 42 selbst ebenfalls möglichst gut mit Wärme versorgt wird.

Die Erfindung löst dies zunächst, in dem wie bereits in den vorherigen Ausführungsbeispielen im Inneren des Gehäuses 70 eine Heizung 60 auf dem Materialrohr 41 angeordnet wird. Zur Übertragung der Wärme von dem Materialrohr 41 auf das Düsenmundstück 42 dient dann wiederum das wärmeleitfähige Element 50. Dieses umgibt den im Materialrohr 41 eingeschobenen Halsabschnitt 421 des Düsenmundstückes. Dabei kann es sich sowohl um eine komplette Ummantelung als auch um abschnittsweise eingelassene Stifte oder Streifen eines thermischanisotropen Materials handeln. Das wärmeleitfähige Element 50 liegt dabei einerseits an einem Absatz 411 im Materialrohr an, so dass dort ein erster Kontaktbereich 51 gebildet wird. Andererseits kann das wärmeleitfähige Element 50 mit einem Flanschabsatz 424 des Düsenmundstückes 42 einen zweiten Kontaktbereich 52 bilden. Verläuft die hochwärmeleitende Richtung des anisotropen Materials nun in der Richtung vom ersten Kontaktbereich 51 zum zweiten Kontaktbereich 52, so wird insbesondere der untere und aus der Spritzgießdüse 110 hervorstehende Bereich 426 des Düsenmundstückes 42 gut mit Wärme versorgt. Mithin gelingt es die fließfähige Masse auch in diesem kritischen Abschnitt 202 des Strömungskanals 20 stets auf der optimalen Temperatur zu halten. Gleichzeitig kann das Düsenmundstück 42 ohne Rücksicht auf eventuelle Wärmeleitungseigenschaften aus einem verschleißfesten Material gefertigt werden.

Denkbar ist darüber hinaus auch, dass die hochwärmeleitfähige Richtung senkrecht zur Richtung zwischen den Kontaktbereichen 51 und 52 verläuft. In diesem Fall wird die Wärme des Materialrohres über den seitlichen Kontaktbereich 54 aufgenommen und auf der diesem Bereich gegenüberliegenden Seite des wärmeleitfähigen Elementes 50 an den Halsabschnitt 421 abgegeben. Auch dies führt zu einer höchst effektiven Aufheizung des Düsenmundstückes 42.

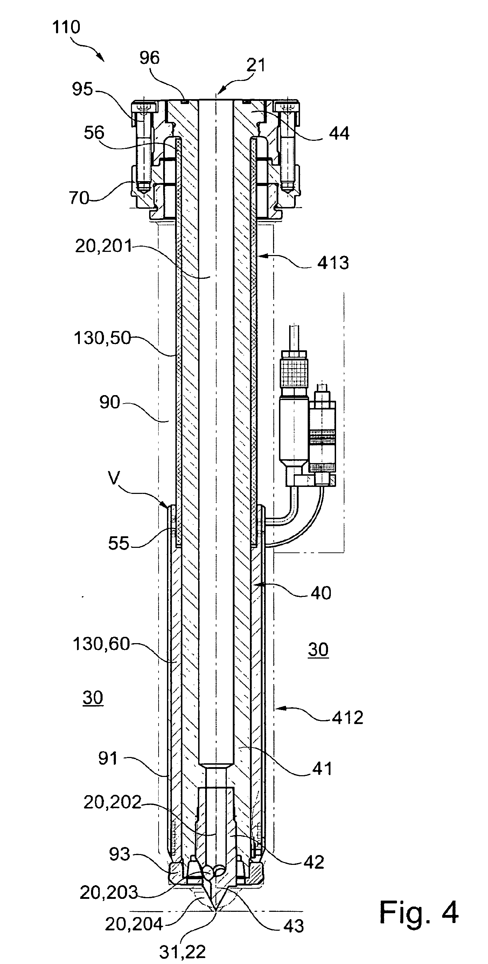

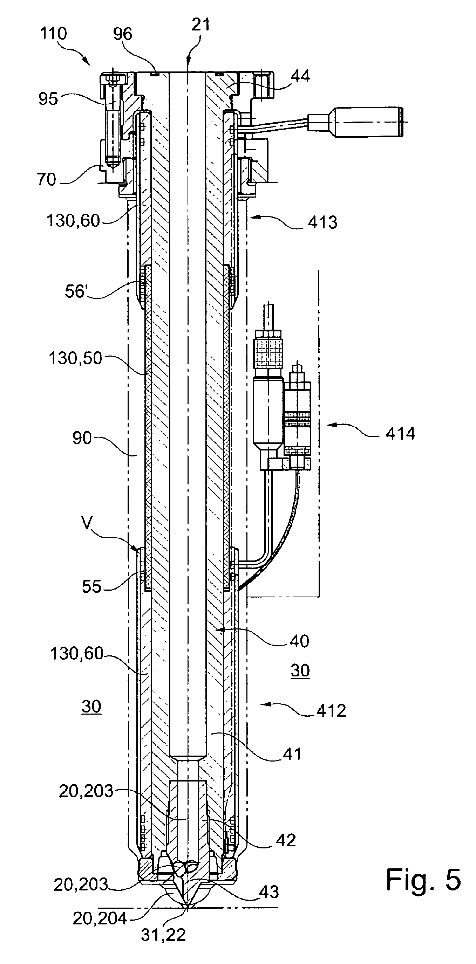

Wie in den Figuren 4 und 5 dargestellt, kann das erfindungsgemäße wärmeleitfähige Element 50 einer erfindungsgemäßen Heizvorrichtung 130 auch im Bereich des Materialrohres 41 angeordnet werden. Insbesondere bei langen Düsen kann damit die Beheizung des Materialrohres 41 dahingehend optimiert werden, dass einerseits eine gleichmäßige Wärmeverteilung entlang des gesamten Materialrohres 41 erreicht wird, und andererseits möglichst wenig Raum durch die Heizung 60 beansprucht wird.

Im Ausführungsbeispiel, das in Fig. 4 dargestellt ist, ist dazu eine Heizvorrichtung 130 vorgesehen, bei der im unteren Bereich 412 der Spritzgießdüse 110 auf dem Materialrohr 41 eine Heizung 60 angeordnet ist. Diese Heizung 60 steht mit einem rund um den oberen Bereich 413 des Materialrohres 41 angeordneten wärmeleitfähigen Element 50 in einem Kontaktbereich 55 in Kontakt. Das wärmeleitfähige Element 50 leitet die Wärme wiederum höchst effektiv zu einem Kontaktbereich 56, der zwischen dem wärmeleitfähigen Element 50 und dem Kopf 44 des Materialrohres 41 ausgebildet ist. Auf diese Weise wird das Materialrohr 41 bis hinauf in den Kopf 44 optimal mit Wärme versorgt, ohne dass das unmittelbare Anordnen einer Heizung 60 in diesem oberen Bereich 413 zwingend erforderlich ist. Dies wirkt sich positiv auf dem Raumbedarf der Spritzgießdüse 110 aus. Diese kann in der Folge insgesamt deutlich schlanker gestaltet werden.

Man erkennt, dass sich bei dieser Bauform außerdem folgender Vorteil ergeben kann. Wird - wie erfindungsgemäß vorgesehen - nämlich ein thermisch anisotropes Material verwendet, welches insbesondere in der Richtung zwischen den Kontaktbereichen 55 und 56 hochwärmeleitfähig ist und das in der quer dazu verlaufenden Richtung schlecht wärmeleitfähig ist, so wird einerseits die Wärme optimal von der Heizung 60 zum zu heizenden Kopf 44 des Materialrohres 41 transportiert. Andererseits findet ein Wärmetransport zwischen dem mit dem wärmeleitfähigen Element 50 bedeckten Bereich des Materialrohres 41 und dem Luftspalt 90, der zwischen der Spritzgießdüse 110 und dem Formnest 30 ausgebildet ist, aufgrund der schlechten Wärmeleitung in dieser Richtung nur in begrenztem Maß statt.

Man erkennt, dass sich die Wärme auf diese Weise vom Kopf 44 des Materialrohres 41 und vom durch die Heizung 60 beheizten unteren Bereich 412 des Materialrohres 41 in den oberen Bereich 413 des Materialrohres 41 sehr gleichmäßig erstrecken kann, ohne dass es beispielsweise zu einem ungewollten Wärmepeak in der Mitte des betreffenden Bereichs 413 kommt. Gleichzeitig kann das Materialrohr 41 in diesem Bereich nur wenig Wärme nach außen abgeben und so verlieren. Die von der Heizung 60 aufgebrachte Wärme kann daher sehr effektiv genutzt werden.

Das in Fig. 5 dargestellte Ausführungsbeispiel unterscheidet sich von dem oben beschriebenen der Fig. 4 lediglich dadurch, dass zwischen dem wärmeleitenden Element 50 und dem Kopf 44 des Materialrohres 41 zusätzlich eine weitere Heizung 61 angeordnet ist. Auch hier wird die Wärme der Heizungen 60, 61 - wie bereist oben dargestellt - sehr effektiv genutzt und es werden Wärmepeaks insbesondere im mittleren Bereich 414 des Materialrohres 41 effektiv vermieden. Mithin kann die fließfähige Masse entlang des gesamten im Materialrohr 41 ausgebildeten Abschnitts 201 des Strömungskanals 20 auf einer gleichmäßigen und optimalen Temperatur gehalten werden.

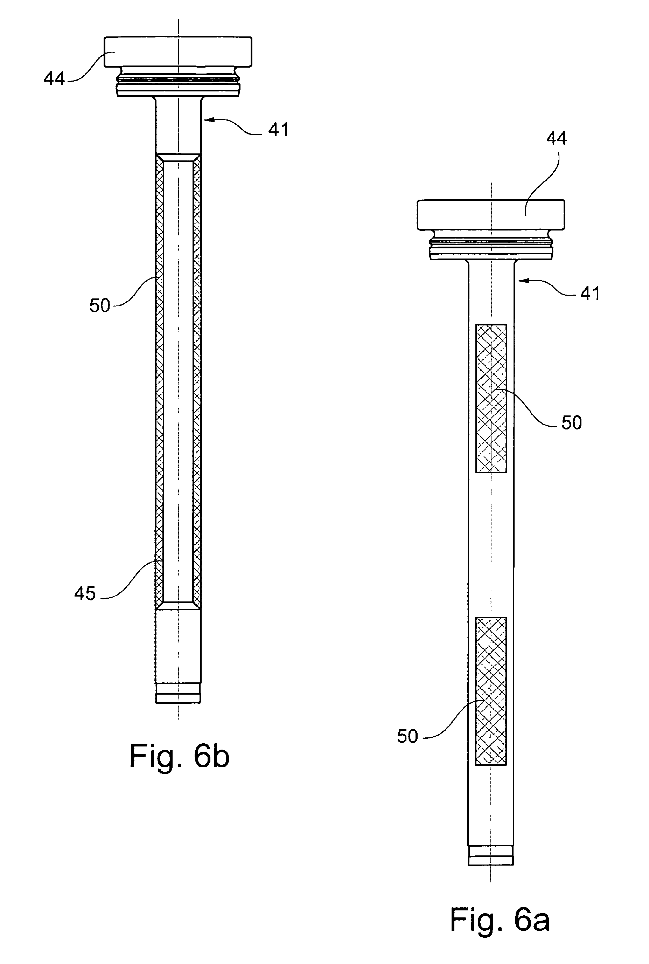

Für die Anordnung des wärmeleitfähigen Elementes 50 auf dem Materialrohr 41 sind wiederum verschiedene Möglichkeiten vorstellbar. So können wie in Fig. 6a dargestellt abschnittsweise Streifen eines erfindungsgemäßen Materials auf der Außenseite des Materialrohres 41 aufgebracht sein. Denkbar ist auch dass das Materialrohr 41, wie in Fig. 6b dargestellt in dem Bereich verjüngt ist, in welchem das wärmeleitfähige Element 50 angeordnet werden soll. Das wärmeleitfähige Element 50 kann dann beispielsweise in Form einer Ummantelung mit dem erfindungsgemäßen Material in die Verjüngung 45 eingebracht werden.

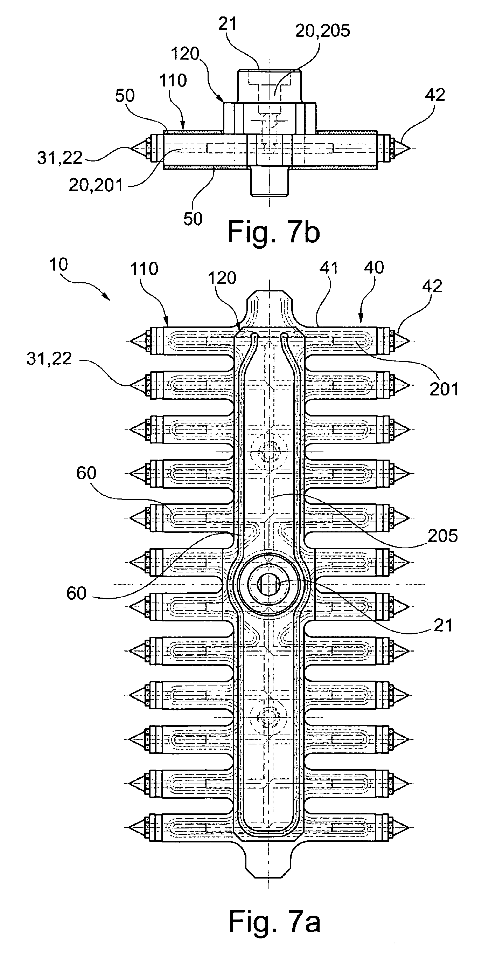

Bei einer in Fig. 7 dargestellten an sich aus dem Stand der Technik bekannten Spritzgießvorrichtung ist eine Vielzahl von Spritzgießdüse 110 an einem Verteiler 120 angeordnet.

Erfindungsgemäß kann bei dieser Ausführungsvariante beispielsweise der Verteiler 120 mit einer Heizung 60 ausgestattet sein. Diese versorgt einerseits den im Verteiler ausgebildeten Abschnitt 205 des Strömungskanals 20. Andererseits verteilt sich die Wärme von dort auch entlang der Düsenkörper der Spritzgießdüsen 110. Auf den Materialrohren 41 der Spritzgießdüsen 110 können dann wärmeleitfähige Elemente 50 angebracht sein. Diese transportieren die von der Heizung 60 erzeugte Wärme dann höchst platzsparend und effektiv zum Bereich der Düsenspitzen 43 der Spritzgießdüsen 110. Gleichzeitig ist denkbar, dass die wärmeleitfähigen Elemente 50 durch ihre schlechte Wärmeleitfähigkeit quer zur hochwärmeleitfähigen Richtung verhindern können, dass die Wärme der Düsenkörper nach außen verloren geht.

Die Erfindung ist nicht auf eine der vorbeschriebenen Ausführungsformen beschränkt, sondern in vielfältiger Weise abwandelbar.

So ist es selbstverständlich denkbar, dass eine Heizvorrichtung 130 mehrere wärmeleitfähige Elemente 50 aufweist, die sowohl im Bereich der Düsenspitzen 43, 43' - in den Figuren 1 bis 3 dargestellt - als auch gleichzeitig im Bereich des Materialrohres 41 und/oder im Bereich des Verteilers 120 angeordnet werden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

Man erkennt, dass bei einer Heizvorrichtung 130 für eine Spritzgießvorrichtung, umfassend wenigstens eine Heizung 60, die aus einem Trägerelement und einem wärmeerzeugenden Element besteht, und wenigstens ein von der Heizung 60 verschiedenes wärmeleitendes Element 50 umfasst, das wärmeleitende Element 50 vorteilhaft aus einem anisotropen Material gefertigt ist. Dabei weist das anisotrope Material wenigstens eine hochwärmeleitende Richtung auf, wobei die Wärmeleitfähigkeit in der hochwärmeleitenden Richtung mehr als 500 W/mK, bevorzugt mehr als 1000 W/mK, besonders bevorzugt mehr als 1500 W/mK beträgt. Bevorzugt ist daher das anisotrope Material ein pyrolytischer Graphit, bevorzugt ein thermisch-pyrolytischer Graphit.

Man erkennt weiter, dass es günstig ist, wenn die Heizung 60 durch eine wärmeleitende Verbindung V direkt oder indirekt derart mit dem wärmeleitfähigen Element 50 verbunden ist, dass die Wärme in der hochwärmeleitenden Richtung durch das wärmeleitende Element 50 geleitet wird. Dabei kann das wärmeleitende Element (50) in einen Teil der Spritzgießvorrichtung einbettbar sein.

Das wärmeleitende Element 50 kann in der hochwärmeleitenden Richtung in unmittelbarem Kontakt mit der Heizung 60 stehen es kann aber auch in räumlicher Trennung zur Heizung 60 angeordnet sein. Dann ist es zweckmäßig, wenn die Verbindung V zwischen der Heizung 60 und dem wärmeleitenden Element 50 von einem Teil der Spritzgießvorrichtung gebildet ist. Der die Verbindung V zwischen der Heizung 60 und dem wärmeleitenden Element 50 bildende Teil der Spritzgießvorrichtung kann verschieden sein von dem Teil der Spritzgießvorrichtung, in welchem das wärmeleitende Element eingebettet ist. Denkbar ist auch, dass das wärmeleitende Element 50 auf einem Teil der Spritzgießvorrichtung aufgebracht ist.

Man erkennt, dass die Verwendung eines anisotropen Materials zum gerichteten Wärmetransport in einer Heizvorrichtung 130 einer Spritzgießvorrichtung besonders vorteilhaft ist, wenn das anisotrope Material wenigstens eine hochwärmeleitende Richtung aufweist, wobei das anisotrope Material in wenigstens einer Richtung, bevorzugt der hochwärmeleitenden Richtung, eine Wärmeleitfähigkeit von mehr als 500 W/mK, bevorzugt mehr als 1000 W/mK, besonders bevorzugt mehr als 1500 W/mK aufweist.

### Bezugszeichenliste

- V: Verbindung

- 10: Spritzgießvorrichtung
- 110: Spritzgießdüse
- 120: Verteiler
- 130: Heizvorrichtung

- 20: Strömungskanal
- 201: Abschnitt
- 202: Abschnitt
- 203: Abschnitt
- 204: Bereich
- 205: Abschnitt
- 21: Einlassöffnung
- 22: Austrittsöffnung

- 30: Formnest
- 31: Formangussöffnung
- 32: Ausnehmung

- 40: Düsenkörper
- 41: Materialrohr
- 411: Absatz
- 412: Unterer Bereich
- 413: Oberer Bereich
- 414: Mittlerer Bereich
- 42: Düsenmundstück
- 42': Endstück
- 421: Halsabschnitt
- 422: Absatz
- 424: Flanschabsatz
- 426: Bereich
- 43: Düsenspitze
- 43': Düsenspitze
- 431: Ausnehmung
- 431': winkelförmige Ausnehmung

- 432: Spitze
- 44: Kopf

- 50: wärmeleitfähiges Element
- 501: erster Stift
- 502: zweiter Stift
- 51: Kontaktbereich
- 52: Kontaktspitze
- 53: Kontaktfläche
- 54: Kontaktbereich
- 55: Kontaktbereich
- 56: Kontaktbereich

- 60: Heizung
- 61: Heizung

- 70: Gehäuse
- 71: Gehäuseabschnitt
- 72: Gehäuseabschnitt
- 73: Gehäuseabschnitt
- 74: Gehäuseabschnitt
- 731: Stütz- und Dichtvorsprung
- 732: Stütz- und Dichtvorsprung
- 721: Stütz- und Dichtvorsprung

- 80: Verschlussnadel

- 90: Luftspalt
- 91: Schutzrohr
- 92: Thermofühler
- 93: Stütz- und Dichtring
- 93': Stütz- und Dichtring
- 931: Rand
- 94: Feder
- 95: Befestigungselement
- 96: Dichtung

## Patentansprüche

1. Heizvorrichtung (130) für eine Spritzgießvorrichtung, umfassend wenigstens eine Heizung (60), die aus einem Trägerelement und einem wärmeerzeugenden Element besteht, und wenigstens ein von der Heizung (60) verschiedenes wärmeleitendes Element (50), **dadurch gekennzeichnet, dass** das wärmeleitende Element (50) aus einem anisotropen Material gefertigt ist.

2. Heizvorrichtung (130) nach Anspruch 1, **dadurch gekennzeichnet, dass** das anisotrope Material wenigstens eine hochwärmeleitende Richtung aufweist.

3. Heizvorrichtung (130) nach Anspruch 2, **dadurch gekennzeichnet, dass** die Wärmeleitfähigkeit in der hochwärmeleitenden Richtung mehr als 500 W/mK, bevorzugt mehr als 1000 W/mK, besonders bevorzugt mehr als 1500 W/mK beträgt.

4. Heizvorrichtung (130) nach einem der Ansprüche 1 bis 3, **dadurch gekennzeichnet, dass** das anisotrope Material ein pyrolytischer Graphit, bevorzugt ein thermisch-pyrolytischer Graphit ist.

5. Heizvorrichtung (130) nach einem der Ansprüche 1 bis 4, **dadurch gekennzeichnet, dass** die Heizung (60) durch eine wärmeleitende Verbindung (V) direkt oder indirekt derart mit dem wärmeleitfähigen Element (50) verbunden ist, dass die Wärme in der hochwärmeleitenden Richtung durch das wärmeleitende Element (50) geleitet wird.

6. Heizvorrichtung (130) nach einem der Ansprüche 1 bis 5, **dadurch gekennzeichnet, dass** das wärmeleitende Element (50) in einen Teil der Spritzgießvorrichtung einbettbar ist.

7. Heizvorrichtung (130) nach einem der Ansprüche 1 bis 6, **dadurch gekennzeichnet, dass** das wärmeleitende Element (50) in der hochwärmeleitenden Richtung in unmittelbarem Kontakt mit der Heizung (60) steht.

8. Heizvorrichtung (130) nach einem der Ansprüche 1 bis 6, **dadurch gekennzeichnet, dass** das wärmeleitende Element (50) in räumlicher Trennung zur Heizung (60) angeordnet ist.

9. Heizvorrichtung (130) nach Anspruch 7, **dadurch gekennzeichnet, dass** die Verbindung (V) zwischen der Heizung (60) und dem wärmeleitenden Element (50) von einem Teil der Spritzgießvorrichtung gebildet ist.

10. Heizvorrichtung (130) nach einem der Ansprüche 1 bis 9, **dadurch gekennzeichnet, dass** der die Verbindung (V) zwischen der Heizung (60) und dem wärmeleitenden Element (50) bildende Teil der Spritzgießvorrichtung verschieden ist von dem Teil der Spritzgießvorrichtung, in welchem das wärmeleitende Element eingebettet ist.

11. Heizvorrichtung (130) nach einem der Ansprüche 1 bis 10, **dadurch gekennzeichnet, dass** das wärmeleitende Element (50) auf einem Teil der Spritzgießvorrichtung aufgebracht ist.

12. Verwendung eines anisotropen Materials zum gerichteten Wärmetransport in einer Heizvorrichtung (130) einer Spritzgießvorrichtung.

13. Verwendung nach Anspruch 12, **dadurch gekennzeichnet, dass** das anisotrope Material wenigstens eine hochwärmeleitende Richtung aufweist.

14. Verwendung nach einem der Ansprüche 12 oder 13, **dadurch gekennzeichnet, dass** das anisotrope Material in wenigstens einer Richtung, bevorzugt der hochwärmeleitenden Richtung, eine Wärmeleitfähigkeit von mehr als 500 W/mK, bevorzugt mehr als 1000 W/mK, besonders bevorzugt mehr als 1500 W/mK aufweist.
